# EUROPEAN PATENT SPECIFICATION

(11) **EP 3 245 411 B1**
(45) Date of publication and mention of the grant of the patent: **27.05.2020**
(21) Application number: 15813212.6
(22) Date of filing: 03.12.2015
(51) Int. Cl.: F16B 5/02

(54) **LOCKING DEVICE IN A COMPENSATION NUT**
VERRIEGELUNGSVORRICHTUNG IN EINER KOMPENSATIONSMUTTER
DISPOSITIF DE VERROUILLAGE DANS UN ÉCROU DE COMPENSATION

(30) Priority: 16.01.2015 ES 201500043
(43) Date of publication of application: 22.11.2017
(73) Proprietor: Illinois Tool Works Inc., Glenview, IL 60025 (US)
(72) Inventor: DIEZ HERRERA, Victor, 08203 Sabadell (Barcelona) (ES)
(74) Representative: HGF Limited
(86) International application number: PCT/US2015/063749
(87) International publication number: WO 2016/114857

(56) References cited:
- WO-A1-2013/150016
- DE-A1-102012 221 228
- US-A1- 2003 077 118

## Description

### SCOPE OF THE INVENTION

This invention relates to a metal compensation nut intended for firmly attaching an applied object to two surfaces of panels which may be separated by a variable distance between them. There are many situations in the motor industry where an attachment which must preserve the fixed distance between structures and include a tolerance compensation to adjust to any variation in this distance between the supporting surfaces has to be made. In this invention a locking device for a compensation nut is provided to ensure that it is in a locked position suitable for transport of the component or for packing different nuts.

### PRIOR ART

A tolerance compensating device for fitting an applied object to two panels which have a variable distance between them, preventing them from collapsing when the applied object is supported on those surfaces, is known, said device having a primary nut with tabs engaging a panel or surface and a threaded cylinder to which the threaded surface of a bolt which also has an outer threaded surface and an inner attachment for the thread of a screw or shank is attached. The thread of the nut and the opposing compensation bolt is a left-hand thread When the bolt for an applied object is threaded within the compensation bolt the first screwing action acts on the compensation bolt which is turned by that force, changing the position or relative height between the nut and the compensation bolt until the distance between the panels is wholly covered. Continued screwing of the bolt for an applied object or shank then makes it possible to secure the applied object which has to be fitted to said two surfaces.

This is the situation in patent US2003/0077118, which is an assembly that automatically compensates for variations in the space between two structures. In this document the inner and outer threaded portions of the secondary or adjustable nut are orientated left or right with the aim that tightening of the bolt against said secondary nut first expands and completely covers the distance between the panels or structures, maintaining that distance, in such a way that after full expansion the applied object is attached to the principal structure.

With nuts of this type being known, the industry has been faced with the problem of their distribution ready for use. In the motor industry, where their field of use lies, tens of thousands of such nuts have been fitted using pneumatic tightening tools. Of course the time and/or speed of each fitting operation has an effect on the productivity of the use of the component and is regarded as a factor requiring improvement.

In this context, as the compensation nut according to the invention is formed of two parts which are attached together by means of a thread, even though they may initially be packed together for distribution to centers where they will be fitted, the conditions under which the boxes are transported for storage or distribution subject said attachments to vibrations and shocks which have the effect that many components become undone, separating the nut and the bolt. This result has an adverse effect on productivity when installing the components because it requires an operator to assemble the separate parts before presenting them for fitting.

The industry has used different means to overcome this disadvantage, for example by means of locks with plastic stops or additional pieces which interfere with the thread, blocking rotation of the bolt. As will be seen below, these solutions are not completely satisfactory and increase the complexity of the component.

Thus the main object of this invention is a locking device for compensation nuts which ensures that the compensation nut remains in the locked position, preventing displacement movements between nuts.

In this invention the aim is to provide said lock against an expansion movement of the compensation nut, in the position in which the component is closed up, without internally affecting the threads, or by means of locking elements placed between said threads so that the compensation nut can be produced and manufactured in a simple low cost process.

This and other advantages of this invention will be more apparent in the course of the description which follows below.

### SUMMARY OF THE INVENTION

The invention describes a metal compensation nut comprising a nut and a bolt, the nut comprising a threaded cylinder and elements for attachment to a surface, a panel structure, the bolt being adjustable to said nut with a threaded outer surface configured to thread onto the mentioned threaded portion of the first nut. Said bolt is provided with an inner attachment for the use of the tightening bolt or shank of an applied object.

In the preferred embodiment of the invention said compensation bolt has an upper surface from which it extends below the axis of the bolt. Mechanical stops, for example constructed as protuberances projecting below said surface, forming a kind of flange, are located on said surface.

Said nut also includes a braking arm which provides an area of movement in which the flange mentioned is engaged. Said braking arm may have a reinforcing rib. The arm has one extremity with a stop and has resilience deriving from its constructed shape. These elements work together to accomplish the objects of the invention in a form which is efficient and easy to manufacture. In fact the nut can be manufactured from a laminar metal surface by deformation and punching, in order to obtain all its formative elements in a single operation.

### BRIEF DESCRIPTION OF THE DRAWINGS

For a better understanding of the invention this description is accompanied by a number of plates of drawings which are provided merely by way of description without limiting the invention.

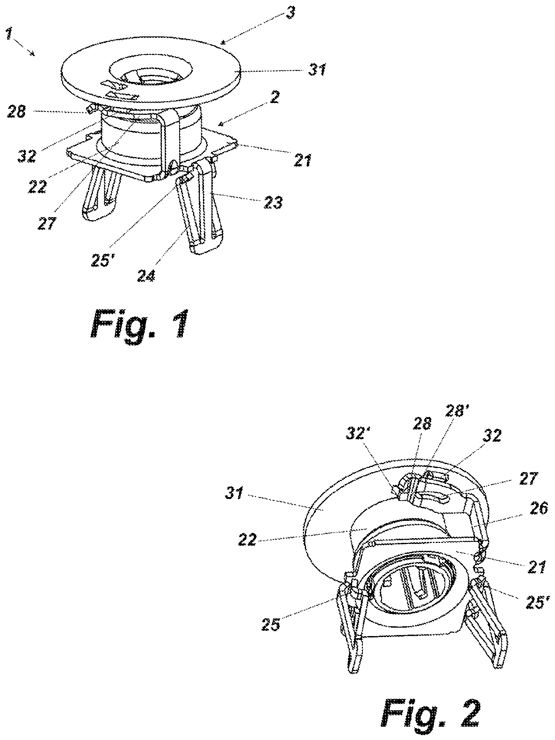

Figure 1 is a perspective view of one of the preferred embodiments of this invention.
Figure 2 is another perspective view of the embodiment in the preceding figure, this time from a lower point of view.

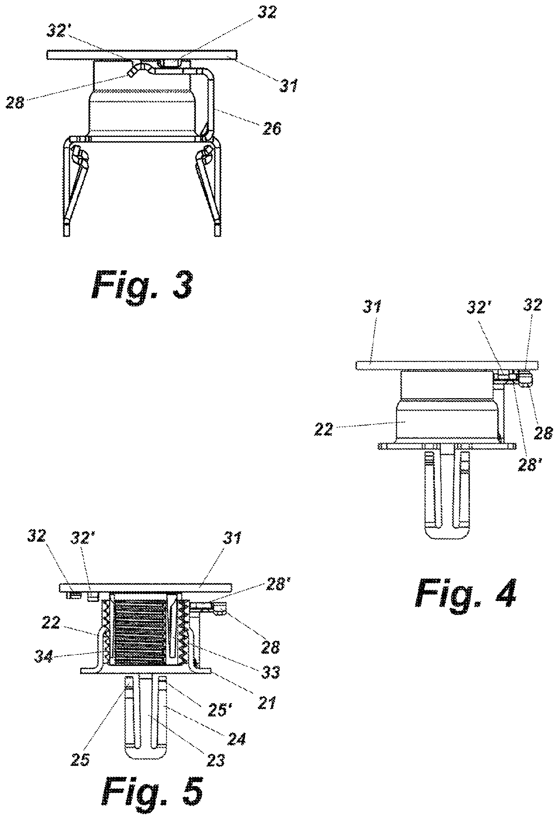

Figure 3 is a front view of the embodiment in the preceding figures.
Figure 4 is a right-hand side view of the embodiment in the previous figures.
Figure 5 is a view in transverse cross-section of a left-hand side view of the embodiment illustrated in the previous figures.

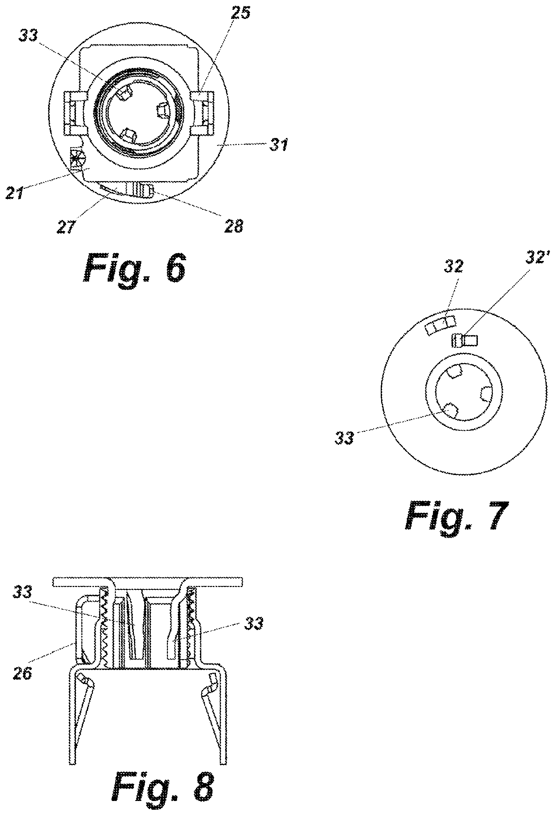

Figure 6 is a lower view in relation to Figure 1.
Figure 7 is a higher view in relation to Figure 1.
Figure 8 is another transverse view of the embodiment shown in the previous figures.

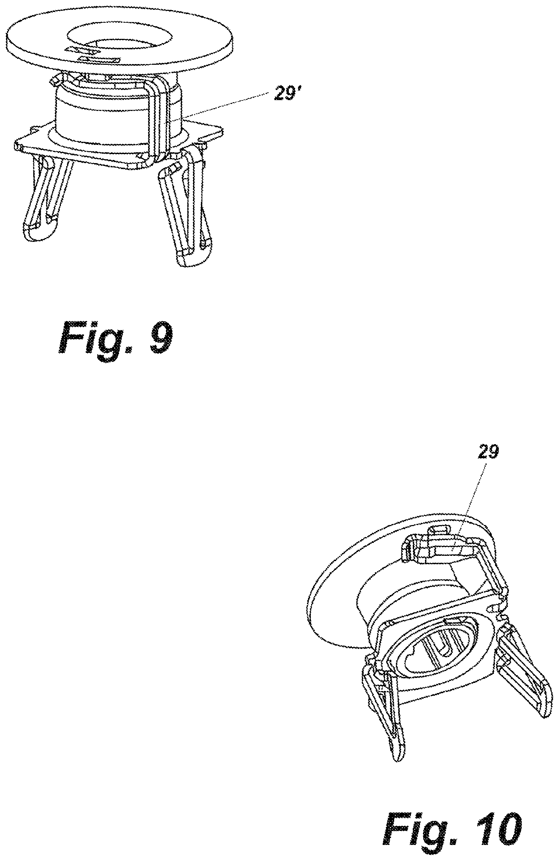

Figures 9 and 10 are perspective views of other possible embodiments of this invention similar to the above, here showing a reinforcing rib.

### DETAILED EXPLANATION OF THE INVENTION

This invention is a metal compensation nut (1) of the type used to secure a part or applied object to a structure, where said structure has to preserve the separation distance from another structure or attachment support, said separation distance being variable for every applied object, said compensation nut (1) comprising a nut (2) and a bolt (3) which can be adjusted with respect to nut (2) .

Nut (2) includes means for attaching it to the extremities of the opening in a surface or panel, by means of tension or flexible tabs with a first bottom section (23) followed by a second section, in two parts, in an ascending direction (24), having at its extremity locking stops (25') or surfaces (25) which act against the surface or panel, said locking stops (25') or surfaces (25) being obtained by folding. When nut (2) is inserted into the supporting structure or panel tabs (23) bend and pass through the opening in the panel, while the second section (24) of said tabs engages the surface of the panel. Considering this from the point of view of the direction in which nut (2) is inserted into the supporting panel, the extreme locking surfaces (25) or stops (25') engage the outer surface of said panel. As may be seen, in the preferred embodiment illustrated in the figures stops (25') are like tails which engage the edge of the opening in the panel, while locking surfaces (25) are flat surfaces which resiliently press against the outer surface of said panel, both securing nut (2) onto the panel. Said nut (2) has a flat surface (21) from which said flexible tabs descend and from which a threaded cylinder (22) emerges in an upward direction.

Bolt (3) can be adjusted for distance from said first nut (2) by the action of screwing it into nut (2), the two parts having lockable opposing threads; that is to say adjustable bolt (3) has an outer threaded surface (34) which engages the thread of nut (2). Furthermore this bolt (3) has a hollow interior with an interior housing for screwing in a bolt to tighten an applied object. In the preferred embodiment illustrated in the figures these interior housings comprise tabs (33) offering friction and anchorage points for a tightening bolt, which is not shown.

The known functioning of the compensation nut implies that when the bolt for an applied object is screwed in, for example in a clockwise direction, it first engages compensation bolt (3). The threads of said bolt (3) and nut (2) are in a direction contrary to that of the bolt for an applied object, in the case in point anticlockwise, so that turning compensation bolt (3) in clockwise rotation increases the separation distance between compensation bolt (3) and nut (2) to cover the space between the panels which has to be overcome. From then on when the travel of the compensation bolt has reached its stop, the action of turning the nut for the applied object secures the applied object which has to be supported. In practice all this process takes place in a single operation in almost a few moments through a pneumatic tightening tool which is set to a predetermined rotation speed and tightening torque.

Said adjustable bolt (3) has an upper surface (31) from which a cylinder with an outer thread (34) with inner engaging tabs (33) extends downwards. A tongue (32) and a stop (32'), provided for example by means of protuberances from said surface projecting downwards, are located on said surface (31).

Nut (2) is provided with an arm (26) which emerges from its base (21) and through successive concatenating folds has one section which is arranged approximately parallel to said surface (31) of bolt (3). Said braking arm (26) provides a zone of movement (27) in which tongue (32) is enclosed.

Said braking arm (26) may have strengthening ribs (29 and 29') in different parts. This arm has a stop (28) which is opposite tongue (32) located on bolt (3). Thanks to the shape of this stop (28) with a downwardly inclined surface and resilience deriving from the constructed shape of arm (26), once a predetermined force has been overcome, for example that corresponding to the screwing up of an applied object, the tongue pushes stop (28) downwards, bends arm (26) to reach a zone in which compensation nut (1) is tightened when said tongue is located in the zone (27) in which it engages arm (26). The function of stop (32') provided on said adjustable bolt (3) is to prevent excessive tightening of the compensation nut, bolt (3) and nut (2), as the force required to expand compensation nut (1) may be excessive. That is to say thanks to stop (32') the compensation nut is never "locked" in a tight position. This stop (32') acts against an extremity (28') provided on arm (26). In the preferred embodiment illustrated in the drawings part of the extremity of arm (26) constitutes a brake or extremity (28') and the other part comprises stop (28) with a downwardly inclined surface.

In the condition prior to fitting compensation nut (1) is in its closed position, in accordance with this invention, in which tongue (32) lies within the zone of movement (27) of arm (26). As we have already mentioned, tightening of the screw for the applied object tends to expand compensation nut (1) increasing the separation distance between nut (2) and adjustable bolt (3), drawing out tongue (32) from engagement in zone of movement {21).

It should be noted that thanks to the resilience of arm (26) the tightening force of the bolt may overcome the obstacle represented by this arm to the expansion of compensation nut (1). Conversely, for example, accidental vibration of the component under transport conditions will be insufficient to bring about this expansion and overcome the closed position of the compensation nut. All of this in accordance with the adopted configuration of the materials of the component.

The process of fitting the component then continues in the envisaged way. First, in response to screwing, the distance between panels is covered and once this has been covered the applied object is automatically tightened to the component.

In the case for example where the component is dismantled the locked or closed position of the compensation nut may again be regained following a reverse order. When the bolt securing the applied object is unscrewed, the latter' s attachment is first loosened and secondly expansion of compensation nut (1) is reduced, reducing the distance or height between nut (2) and adjustable bolt (3), without it being possible to go beyond stop (28') which establishes a limit for the penetration of bolt (3) into nut (2). The locked position of compensation nut (1) can be achieved because when tongue (32) abuts against stop (28) of arm (26) it pushes the latter downwards because of its relative flexibility and the shape of the stop (28) mentioned, which is in the form of a fold engaging tongue (32). This makes it possible for tongue (32) to reach zone of movement (27) of said arm (26) where it is engaged.

Engagement between tongue (32) and said zone of movement (27) occurs because said zone has a slot, groove or depression in which tongue (32) is enclosed. Depending upon the embodiment the rigidity of the arm may be varied by varying the thickness of the material, including reinforcing ribs (29 and 29') in different portions of said arm, etc. In the prior art stops preventing the expansion travel of adjustable bolt (3) have been provided by means of a plastic crown overmoulded onto the outer part of nut (2) which includes them, these stops acting as opposing elements located on the adjustable bolt. Contrary to this invention where the locking device is simpler, does not require additional parts, and is manufactured from a single sheet of metal by forming and punching.

Furthermore, in the device according to this invention the locking has sufficient resilient behavior, in which in the event of vibration tending to undo it, once the original displacing impulse has been overcome, the resilience of the device returns the component to its closed position, restoring its starting position. In the prior art locking was only partly resilient and the consequences of vibration accumulated as a slackening of the parts, it being likely that the sum of successive effects would finally cause nut (2) and bolt (3) to become detached.

Thanks to this invention, and as a consequence thereof, a simple form of obtaining closure or a closed position of a compensation nut which prevents it from becoming accidentally undone and ensures suitable conditions for distribution and transport has been obtained. Said closed position has also been achieved without the incorporation of complex components engaging the threads of the nuts, such that compensation nut (1) according to this invention can be manufactured simply and easily.

It is to be understood that in this case any details of finish and form may vary without adversely affecting or altering the essence of the invention, all in accordance with the appended principal and dependent claims.

## Claims

1. Compensation nut comprising a locking device used to secure a part or applied object to a first structure, said structure making it necessary to maintain the distance separating it from another second structure or attachment support, said separation distance varying according to each applied object, said compensation nut (1) being formed of a nut (2) and an adjustable bolt (3), said compensation nut (1) being of metal material, **characterized in that** said locking device is of metal and forms an integral part of said compensation nut (1), because said locking is flexible and is achieved through a stop (32') and a tongue (32) in said adjustable bolt (3) acting against a flexible arm (26) located in said nut (2), making possible a locking position in which the distance of separation between said nut (2) and said adjustable bolt (3) is locked, a force at least corresponding to the screwing of an applied object into said compensation nut (1) being necessary in order to overcome said locked or closed position.

2. Compensation nut according to the previous claim, **characterized in that** said flexible arm (26) cannot move beyond said stop (32') of said adjustable bolt (3), preventing an excessively tight locked position between said nut (2) and said adjustable bolt (3).

3. Compensation nut according to any one of the preceding claims, **characterized in that** said flexible arm (26) has a zone of movement and engagement (27) which encloses said tongue (32) of said adjustable bolt (3), said engagement preventing accidental expansion of the distance between said nut (2) and said adjustable bolt (3) and forming the closed or locked position of said compensation nut (1).

4. Compensation nut according to the preceding claim, **characterized in that** said arm (26) has at its extremity a stop (28) in the form of a fold which holds it away from said adjustable bolt (3), in such a way that pressing said tongue (32) closer to and against said stop (28) bends said arm (26), allowing said tongue (32) to reach said zone of movement and engagement (27) and achieving the closed position for the nut.

5. Compensation nut according to any one of the preceding claims, **characterized in that** the extremity of said flexible arm (26) has an extremity (28') of said flexible arm (26) against which said stop (32') acts.

6. Compensation nut according to any one of the preceding claims, **characterized in that** said arm (26) has reinforcement in the form of ribs (29 and 29') in any of its parts.

7. Compensation nut according to any of the preceding claims, **characterized in that** said nut (2) of said compensation nut (1) comprises a base (21) from which descend flexible tabs comprising a first downward section (23) and a second upward section (24) divided into two parts, at the extremities of which there are locking stops (25') or surfaces (25), said locking stops (25') or surfaces (25) being obtained by folding.

8. Compensation nut according to the preceding claim, **characterized in that** said nut (2) of said compensation nut (1) includes a cylinder (22) with an inner thread and said arm (26), both emerging from said surface (21).

9. Compensation nut according to any one of the preceding claims, **characterized in that** said adjustable bolt (3) has a surface (31) from which extends an outer threaded cylinder (34), also having friction or engaging elements in an axial inner space for the passage of a fixing bolt for an applied object.

10. Compensation nut according to the preceding claim, **characterized in that** said tongue (32) is a downward projecting protuberance from said surface (31).

11. Compensation nut according to the preceding claim, **characterized in that** said inner friction or engaging elements comprise inner engaging tabs (33).

## Patentansprüche

1. Ausgleichsmutter, umfassend eine Verriegelungsvorrichtung, die zum Fixieren eines Teils oder angebrachten Objekts an einer ersten Struktur verwendet wird, wobei es die Struktur erforderlich macht, den sie von einer anderen, zweiten Struktur oder Befestigungsstütze trennenden Abstand aufrechtzuerhalten, wobei der Trennungsabstand gemäß jedem angebrachten Objekt variiert, wobei die Ausgleichsmutter (1) aus einer Mutter (2) und einem einstellbaren Bolzen (3) gebildet wird, wobei die Ausgleichsmutter (1) aus einem metallischen Material ist, **dadurch gekennzeichnet, dass** die Verriegelungsvorrichtung aus Metall ist und einen integralen Teil der Ausgleichsmutter (1) bildet, weil die Verriegelung flexibel ist und durch einen Anschlag (32') und eine Zunge (32) in dem einstellbaren Bolzen (3) erreicht wird, die gegen einen sich in der Mutter (2) befindenden flexiblen Arm (26) wirkt, wodurch eine Verriegelungsposition ermöglicht wird, in der der Trennungsabstand zwischen der Mutter (2) und dem einstellbaren Bolzen (3) verriegelt ist, wobei eine Kraft, die dem Einschrauben eines angebrachten Objekts in die Ausgleichsmutter (1) mindestens entspricht, erforderlich ist, um die verriegelte oder geschlossene Position zu überwinden.

2. Ausgleichsmutter nach dem vorherigen Anspruch, **dadurch gekennzeichnet, dass** sich der flexible Arm (26) nicht über den Anschlag (32') des einstellbaren Bolzens (3) hinaus bewegen kann, wodurch eine übermäßig fest verriegelte Position zwischen der Mutter (2) und dem einstellbaren Bolzen (3) verhindert wird.

3. Ausgleichsmutter nach einem der vorhergehenden Ansprüche, **dadurch gekennzeichnet, dass** der flexible Arm (26) einen Bewegungs- und Eingriffsbereich (27) hat, der die Zunge (32) des einstellbaren Bolzens (3) umschließt, wobei dieser Eingriff ein zufälliges Erweitern des Abstands zwischen der Mutter (2) und dem einstellbaren Bolzen (3) verhindert und die geschlossene oder verriegelte Position des Ausgleichsmutter (1) bildet.

4. Ausgleichsmutter nach dem vorhergehenden Anspruch, **dadurch gekennzeichnet, dass** der Arm (26) an seinem Ende einen Anschlag (28) in Form eines Knicks hat, der ihn von dem einstellbaren Bolzen (3) weg hält, so dass, wenn die Zunge (32) näher zu und gegen den Anschlag (28) gedrückt wird, der Arm (26) gebogen wird, wodurch gestattet wird, dass die Zunge (32) den Bewegungs- und Eingriffsbereich (27) erreicht und die geschlossene Position der Mutter erreicht.

5. Ausgleichsmutter nach einem der vorhergehenden Ansprüche, **dadurch gekennzeichnet, dass** das Ende des flexiblen Arms (26) ein Ende (28') des flexiblen Arms (26) umfasst, gegen das der Anschlag (32') wirkt.

6. Ausgleichsmutter nach einem der vorhergehenden Ansprüche, **dadurch gekennzeichnet, dass** der Arm (26) eine Verstärkung in Form von Rippen (29 und 29') in irgendeinem seiner Teile hat.

7. Ausgleichsmutter nach einem der vorhergehenden Ansprüche, **dadurch gekennzeichnet, dass** die Mutter (2) der Ausgleichsmutter (1) eine Basis (21) umfasst, von der flexible Nasen herabhängen, die einen ersten Abwärtsabschnitt (23) und einen zweiten Aufwärtsabschnitt (24) umfassen, die in zwei Teile aufgeteilt sind, an deren Enden Arretierungsanschläge (25') oder Flächen (25) vorhanden sind, wobei die Arretierungsanschläge (25') oder Flächen (25) durch Knicken erhalten werden.

8. Ausgleichsmutter nach dem vorhergehenden Anspruch, **dadurch gekennzeichnet, dass** die Mutter (2) der Ausgleichsmutter (1) einen Zylinder (22) mit einem Innengewinde und den Arm (26) enthält, die beide von der Fläche (21) hervortreten.

9. Ausgleichsmutter nach einem der vorhergehenden Ansprüche, **dadurch gekennzeichnet, dass** der einstellbare Bolzen (3) eine Fläche (31) hat, von der sich ein mit einem Außengewinde versehener Zylinder (34) erstreckt, auch mit Reibungs- und Eingriffselementen in einem axialen Innenraum für das Passieren eines Befestigungsbolzens für ein angebrachtes Objekt.

10. Ausgleichsmutter nach dem vorhergehenden Anspruch, **dadurch gekennzeichnet, dass** die Zunge (32) ein nach unten vorragender Vorsprung von der Fläche (31) ist.

11. Ausgleichsmutter nach dem vorhergehenden Vorsprung, **dadurch gekennzeichnet, dass** die inneren Reibungs- und Eingriffselemente innere Eingriffsnasen (33) umfassen.

## Revendications

1. Écrou de compensation comprenant un dispositif de verrouillage utilisé pour fixer une pièce ou un objet appliqué à une première structure, ladite structure rendant nécessaire de maintenir la distance la séparant d'une autre deuxième structure ou d'un support de fixation, ladite distance de séparation variant en fonction de chaque objet appliqué, ledit écrou de compensation (1) étant formé d'un écrou (2) et d'un boulon ajustable (3), ledit écrou de compensation (1) étant en matériau métallique, **caractérisé en ce que** ledit dispositif de verrouillage est en métal et fait partie intégrante dudit écrou de compensation (1), parce que ledit verrouillage est flexible et est réalisé par le biais d'une butée (32') et d'une langue (32) dans ledit boulon ajustable (3), agissant contre un bras flexible (26) situé dans ledit écrou (2), permettant d'obtenir une position de verrouillage dans laquelle la distance de séparation entre ledit écrou (2) et ledit boulon ajustable (3) est verrouillée, une force correspondant au moins au vissage d'un objet appliqué dans ledit écrou de compensation (1) étant nécessaire pour surmonter ladite position verrouillée ou fermée.

2. Écrou de compensation selon la revendication précédente, **caractérisé en ce que** ledit bras flexible (26) ne peut pas se déplacer au-delà de ladite butée (32') dudit boulon ajustable (3), empêchant une position verrouillée de manière excessivement serrée entre ledit écrou (2) et ledit boulon ajustable (3).

3. Écrou de compensation selon l'une quelconque des revendications précédentes, **caractérisé en ce que** ledit bras flexible (26) a une zone de mouvement et d'engagement (27) qui entoure ladite langue (32) dudit boulon ajustable (3), ledit engagement empêchant une augmentation accidentelle de la distance entre ledit écrou (2) et ledit boulon ajustable (3) et formant la position fermée ou verrouillée dudit écrou de compensation (1).

4. Écrou de compensation selon la revendication précédente, **caractérisé en ce que** ledit bras (26) présente, au niveau de son extrémité, une butée (28) sous la forme d'un pli qui le maintient à l'écart dudit boulon ajustable (3) de telle sorte que le fait de presser ladite langue (32) plus près de ladite butée (28) et contre celle-ci fasse fléchir ledit bras (26), permettant à ladite langue (32) d'atteindre ladite zone de mouvement et d'engagement (27) et de réaliser la position fermée pour l'écrou.

5. Écrou de compensation selon l'une quelconque des revendications précédentes, **caractérisé en ce que** l'extrémité dudit bras flexible (26) a une extrémité (28') dudit bras flexible (26) contre laquelle agit ladite butée (32').

6. Écrou de compensation selon l'une quelconque des revendications précédentes, **caractérisé en ce que** ledit bras (26) présente un renforcement sous la forme de nervures (29 et 29') dans l'une quelconque de ses parties.

7. Écrou de compensation selon l'une quelconque des revendications précédentes, **caractérisé en ce que** ledit écrou (2) dudit écrou de compensation (1) comprend une base (21) depuis laquelle descendent des languettes flexibles comprenant une première section descendante (23) et une deuxième section montante (24) divisées en deux parties, aux extrémités desquelles se trouvent des butées (25') ou surfaces (25) de verrouillage, lesdites butées (25') ou surfaces (25) de verrouillage étant obtenues par pliage.

8. Écrou de compensation selon la revendication précédente, **caractérisé en ce que** ledit écrou (2) dudit écrou de compensation (1) comporte un cylindre (22) avec un filetage interne et ledit bras (26), tous deux émergeant de ladite surface (21) .

9. Écrou de compensation selon l'une quelconque des revendications précédentes, **caractérisé en ce que** ledit boulon ajustable (3) a une surface (31) depuis laquelle s'étend un cylindre fileté extérieur (34), ayant également des éléments de friction ou d'engagement dans un espace interne axial pour le passage d'un boulon de fixation pour un objet appliqué.

10. Écrou de compensation selon la revendication précédente, **caractérisé en ce que** ladite langue (32) est une protubérance saillant vers le bas depuis ladite surface (31).

11. Écrou de compensation selon la revendication précédente, **caractérisé en ce que** lesdits éléments de friction ou d'engagement internes comprennent des languettes d'engagement internes (33).
